(19) Europäisches Patentamt
European Patent Office
Office européen des brevets

(11) **EP 2 880 360 B1**

(12) **EUROPÄISCHE PATENTSCHRIFT**

(45) Veröffentlichungstag und Bekanntmachung des Hinweises auf die Patenterteilung:
**24.02.2021 Patentblatt 2021/08**

(21) Anmeldenummer: **13745389.0**

(22) Anmeldetag: **01.08.2013**

(51) Int Cl.:
*F21V 7/06* (2006.01)　　*F21V 11/16* (2006.01)
*F21V 13/10* (2006.01)　　*F21Y 115/10* (2016.01)
*F21V 29/76* (2015.01)　　*G02B 5/00* (2006.01)
*G02B 19/00* (2006.01)

(86) Internationale Anmeldenummer:
**PCT/EP2013/066166**

(87) Internationale Veröffentlichungsnummer:
**WO 2014/020102 (06.02.2014 Gazette 2014/06)**

(54) **LED-STRAHLER**

LED EMITTER

PROJECTEUR À DEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.08.2012 DE 202012102927 U**

(43) Veröffentlichungstag der Anmeldung:
**10.06.2015 Patentblatt 2015/24**

(73) Patentinhaber: **Zumtobel Lighting GmbH**
**32657 Lemgo (DE)**

(72) Erfinder:
• **DÜNSCHEDE, Elmar**
**33100 Paderborn (DE)**

• **VON KLOEDEN, Burkhard**
**32760 Detmold (DE)**

(74) Vertreter: **Thun, Clemens**
**Mitscherlich PartmbB**
**Patent- und Rechtsanwälte**
**Sonnenstraße 33**
**80331 München (DE)**

(56) Entgegenhaltungen:
WO-A1-2011/125009　　CN-U- 202 091 826
US-A1- 2003 117 798　　US-A1- 2011 090 700

EP 2 880 360 B1

**Beschreibung**

Die vorliegende Erfindung betrifft einen Strahler gemäß dem Oberbegriff des Anspruchs 1, der einen topfartigen Reflektor sowie eine am Boden des Reflektors angeordnete LED-Lichtquelle aufweist.

Aufgrund der Fortschritte in der Entwicklung von Lichtquellen auf Halbleiterbasis können LEDs zwischenzeitlich in nahezu sämtlichen Anwendungsgebieten der Beleuchtungstechnologie eingesetzt werden. Im Vergleich zu herkömmlichen Lichtquellen wie bspw. Leuchtstofflampen weisen LEDs äußerst kompakte Abmessungen auf, d.h., sie stellen im Vergleich zu früheren Lichtquellen sog. punktförmige Lichtquellen dar. Diese Eigenschaft, die in einigen Anwendungsgebieten die Nutzung spezieller Optiken erfordert, um eine homogene Lichtabgabe zu erzielen, ist bei der Realisierung von Strahlern, also Leuchten, welche das Licht stark gebündelt abgeben, von Vorteil. Mittlerweile sind zahlreiche LED-Strahler auf dem Markt, also Lichtquellen, bei denen im Bodenbereich eines topfartig ausgestalteten Reflektors eine LED-Lichtquelle angeordnet ist. Die Bündelung des Lichts erfolgt dabei über die Reflexionsflächen des Reflektors.

Es hat sich gezeigt, dass bei derartigen Strahlern bei entsprechender Gestaltung der Reflektoren das von der LED-Lichtquelle in einen weiten Winkelbereich abgestrahlte Licht sehr gut gebündelt werden kann. Allerdings weisen derartige Strahler, wie sie aus dem Stand der Technik bekannt sind, oftmals die Eigenschaft auf, dass ein das zentrale Strahlenbündel umgebender Bereich zumindest geringfügig ebenfalls beleuchtet wird. D.h., wird mit einem derartigen Strahler aus dem Stand der Technik eine ebene Fläche beleuchtet, so ist dort aufgrund der Wirkung des Reflektors ein - in der Regel - kreisförmiger heller Leuchtfleck erkennbar, dessen Umgebung leicht diffus aufgehellt erscheint.

Der US 2003/117798 A1 und der CN 202 091 826 U können bspw. Strahler entnommen werden.

Der vorliegenden Erfindung liegt die Aufgabenstellung zugrunde, die Lichtabgabe bei einem derartigen LED-Strahler zu optimieren. Insbesondere soll die oben angesprochene diffuse Lichtabgabe, welche das zentrale Strahlenbündel umgibt, möglichst vermieden werden, sodass letztendlich auf einer beleuchteten ebenen Fläche ausschließlich ein hell erleuchteter Kreis erscheint, der scharf gegenüber der Umgebung abgegrenzt ist.

Die Aufgabe wird durch einen Strahler mit den Merkmalen des Anspruchs 1 gelöst. Vorteilhafte Weiterbildungen der Erfindung sind Gegenstand der abhängigen Ansprüche.

Die erfindungsgemäße Lösung beruht auf der Idee, innerhalb des Reflektors eine Blende anzuordnen, wobei die Blende derart ausgestaltet ist, dass sie eine direkte Lichtabgabe des von der LED-Lichtquelle abgegebenen Lichts verhindert. Die Blende, die auftreffendes Licht vollständig bzw. nahezu vollständig absorbiert, sorgt also dafür, dass lediglich solche Lichtstrahlen den Strahler verlassen können, welche zuvor an dem Reflektor reflektiert wurden. Es hat sich gezeigt, dass durch Absorbieren bzw. Blockieren des direkt abgegebenen Lichts die Lichtabgabe des LED-Strahlers deutlich verbessert werden kann. Insbesondere wird durch die erfindungsgemäße Lösung eine Lichtabgabe erzielt, bei der an der beleuchteten Fläche ein gegenüber der Umgebung scharf abgegrenzter leuchtender Fleck bzw. Bereich auftritt.

Gemäß der vorliegenden Erfindung wird also ein Strahler mit einem topfartigen Reflektor sowie einer am Boden des Reflektors angeordneten LED-Lichtquelle vorgeschlagen, wobei innerhalb des Reflektors eine kreisförmige Blende angeordnet ist, welche auftreffendes Licht absorbiert und derart ausgestaltet ist, dass sie eine direkte Abstrahlung von Licht verhindert. Hierbei gilt für den Abstand a zwischen LED-Lichtquelle und Blende:

$$a = |{-}y|, \text{ wobei } y = \frac{h \cdot r_{refl} - h \cdot z}{z} \text{ und } z = r_{refl} - r_{LED},$$

wobei h die Höhe des Reflektors, $r_{refl}$ der Radius der Lichtaustrittsöffnung des Reflektors, $r_{LED}$ der Radius der LED-Lichtquelle und y der Abstand der LED-Lichtquelle zum Scheitelpunkt bzw. Schnittpunkt der aufeinander zulaufenden Reflektorwände ist. Für den Radius der Blende $r_{Blende}$ gilt: $r_{Blende} = \tan(\alpha) \cdot (a + y)$ wobei

$$\tan(\alpha) = \frac{r_{refl}}{h + y}.$$

Hierbei weisen die LED-Lichtquelle und die Blende eine ähnliche Umfangsform auf und unterscheiden sich lediglich in ihrer Größe. Die Wände des rotationssymmetrischen Reflektors folgen dabei im Querschnitt einer Parabelform.

Die Anordnung der Blende innerhalb des Reflektors kann bspw. über mehrere Stege erfolgen, welche die Blende in der gewünschten Position halten. Alternativ hierzu könnte die Blende auch Bestandteil einer Scheibe sein, welche parallel zur Montageebene der LED-Lichtquelle ausgerichtet ist und sich durch den Reflektor erstreckt, wobei der außerhalb der Blende befindliche Bereich der Scheibe klar ist, sodass hier auftreffende Lichtstrahlen nicht bzw. nur unwesentlich beeinflusst werden. Die LED-Lichtquelle selbst kann bspw. auf einem Kühlkörper gelagert oder thermisch mit einem Kühlkörper gekoppelt sein.

Letztendlich wird hierdurch ein Strahler auf LED-Basis geschaffen, der gegenüber bislang bekannten Strahlern verbesserte Eigenschaften hinsichtlich seiner Lichtabstrahlcharakteristik aufweist. Trotz allem kann durch eine entsprechende Wahl der Anordnung und Gestalt der Blende eine hohe Effizienz in der Lichtabgabe insgesamt erzielt werden.

Nachfolgend soll die Erfindung anhand der beiliegenden Zeichnung näher erläutert werden. Es zeigen:

Figur 1    eine Schnittdarstellung eines ersten Ausführungsbeispiels eines erfindungsgemäßen Strahlers;

Figur 2    eine schematische Darstellung des Zusammenhangs verschiedener Größen des erfindungsgemäßen Strahlers und

Figur 3    die Schnittdarstellung eines zweiten Ausführungsbeispiels einen erfindungsgemäßen Strahlers.

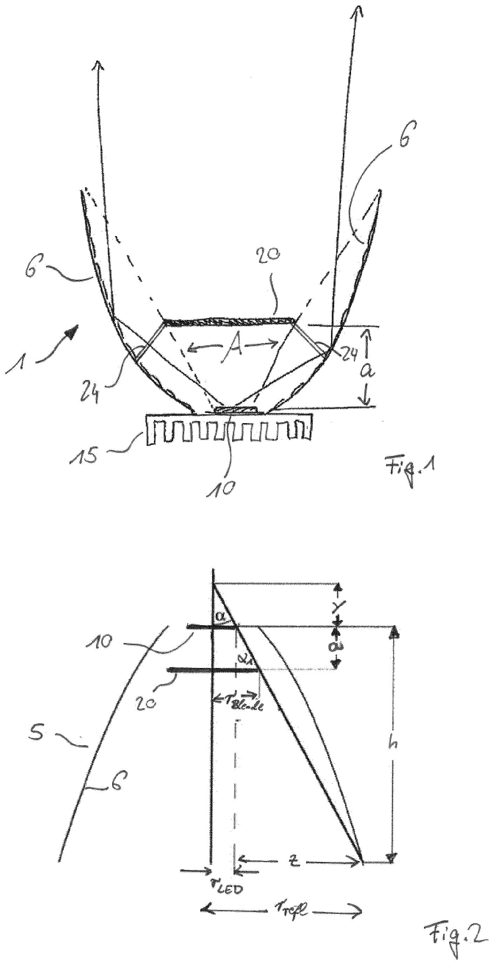

Entsprechend der Schnittdarstellung von Figur 1 weist der erfindungsgemäße und allgemein mit dem Bezugszeichen 1 versehene LED-Strahler einen topfartig ausgestalteten Reflektor 5 auf. Der Reflektor 5 ist rotationssymmetrisch ausgebildet und weist an seiner Innenseite Reflexionsflächen 6 auf, deren Form einer Parabelform angeglichen ist. Die dargestellte Parabelform ist insofern von Vorteil, als hierdurch sehr effektiv eine Bündelung und insbesondere parallele Abstrahlung der reflektierten Lichtstrahlen erzielt werden kann.

An der Bodenfläche des Reflektors 5 ist auf einem Träger eine LED-Lichtquelle 10 angeordnet. Es kann sich hierbei um eine einzelne LED handeln. Denkbar wäre allerdings auch die Verwendung mehrerer - vorzugsweise verschiedenfarbiger - LEDs, welche zu einem LED-Cluster zusammengefasst sind und durch geeignete Ansteuerung der verschiedenen LEDs eine Einstellung des Farbtons bzw. der Farbtemperatur des abgegebenen Lichts erlauben. Als Träger für die LED-Lichtquelle 10 dient im dargestellten Ausführungsbeispiel ein Kühlkörper 15, über den die während des Betriebs der LED-Lichtquelle 10 auftretende Wärme abgeführt werden kann. Die Lichtquelle 10 ist entweder unmittelbar auf den Kühlkörper 15 angeordnet oder mit diesem thermisch gekoppelt.

In den bislang beschriebenen Eigenschaften entspricht der dargestellte LED-Strahler 1 den bereits aus dem Stand der Technik bekannten Strahlern. Bei den bereits bekannten Strahlern hat sich allerdings gezeigt, dass die hieraus resultierende Lichtabgabe insofern unerwünschte Eigenschaften aufweist, als neben einem zentralen, hell beleuchteten Bereich noch ein zumindest schwach beleuchteter Umgebungsbereich auftritt. Dies ist insbesondere auf dasjenige Licht zurückzuführen, welches von der LED-Lichtquelle 10 stammt und unmittelbar den Reflektor 5 verlässt, also ohne zuvor an den Reflexionswänden 6 des Reflektors 5 umgelenkt zu werden.

Um deshalb die Lichtabgabe zu optimieren, ist bei der erfindungsgemäßen Leuchte 1 die Verwendung einer Blende 20 vorgesehen, welche innerhalb des Reflektors 5 angeordnet ist. Wie der Schnittdarstellung von Figur 1 entnommen werden kann, ist die plattenförmige Blende 20 parallel zur Fläche der LED-Lichtquelle 10 ausgerichtet. Sie ist in einem gewissen Abstand a vor der LED-Lichtquelle 10 angeordnet und hinsichtlich ihrer Form und Abmessungen derart ausgestaltet, dass sie einen direkten Lichtaustritt aus dem Reflektor 5 verhindert. Im dargestellten Ausführungsbeispiel bedeutet dies, dass Licht, welches von der LED-Lichtquelle 10 in dem Bereich A abgeben wird, auf die Blende 20 trifft und von dieser absorbiert wird. Licht hingegen, welches außerhalb des Winkelbereichs A abgestrahlt wird, trifft auf die Reflexionsfläche 6 des Reflektors 5 und kann nach entsprechender Umlenkung die Austrittsöffnung des Reflektors 5 verlassen. Da also ausschließlich derart durch den Reflektor 5 umgelenkte Lichtstrahlen diesen verlassen können, ist sichergestellt, dass die Lichtabstrahleigenschaften des erfindungsgemäßen Strahlers 1 ausschließlich durch den Reflektor 5 bestimmt werden. Dies wiederum hat zur Folge, dass das Licht sehr gut gebündelt werden kann und insbesondere auf einer von dem Strahler 1 beleuchteten Fläche ein scharf abgegrenzter, hell beleuchteter Bereich entsteht. Der bislang auftretende und als störend empfundene umgebende aufgehellte Bereich hingegen tritt bei dem erfindungsgemäßen Strahler nicht mehr auf.

Die Blende 20 dient also dazu, denjenigen Teil des Lichts aufzufangen, der sich auf die gewünschte Lichtabgabe störend auswirkt. Auf der anderen Seite sollte selbstverständlich möglichst tatsächlich nur der störende Lichtanteil absorbiert werden, um eine möglichst hohe Effizienz für den Strahler 1 zu erzielen. Eine erste Voraussetzung hierfür ist, dass die Blende 20 hinsichtlich ihrer Form an die Form der LED-Lichtquelle 10 angepasst ist. D.h., LED-Lichtquelle 10 und Blende 20 weisen eine ähnliche Umfangsform auf und unterscheiden sich ausschließlich hinsichtlich ihrer Größe. Hierbei sind Kreisformen für die Lichtquelle und die Blende 10 bzw. 20 vorgesehen.

Weiterhin wird der Abstand a zwischen Lichtquelle 10 und Blende 20 in geeigneter Weise gewählt, wobei die hierbei zu berücksichtigenden Größen in Figur 2 dargestellt sind. Die schematische Darstellung in Figur 2 zeigt hierbei eine Parabelform des Reflektors 5. Ferner ist die Lichtquelle 10 nicht am Scheitelpunkt bzw. am Schnittpunkt der aufeinander zulaufenden Reflexionsflächen 6 angeordnet sondern in einem gewissen Abstand y hierzu. Die Lichtquelle 10 und die Blende weisen den Radius $r_{LED}$ bzw. $r_{Blende}$ auf, wobei eine kreisförmige Lichtquelle sowie eine kreisförmige Blende vorgesehen sind. Geht man davon aus, dass die Höhe des Reflektors h, der Radius der Lichtaustrittsöffnung des Reflektors sowie der Radius der LED-Lichtquelle $r_{LED}$ bekannt sind, so berechnen sich die Größen y (Abstand zwischen Scheitel des Reflektors und LED-Lichtquelle), a (Abstand zwischen Blende und LED-Lichtquelle) sowie Radius $r_{Blende}$ der Blende wie folgt:

Ausgehend von

$$\tan(\alpha_1) = \frac{z}{h} \text{ mit } z = r_{refl} - r_{LED}$$

und

$$\tan(\alpha) = \frac{r_{refl}}{h + y}$$

ergibt sich wegen $\alpha_1 = \alpha$:

$$y = \frac{h \cdot r_{refl} - h \cdot z}{z}$$

Ferner gilt wegen

$$\frac{r_{Blende}}{r_{LED}} = \frac{a + y}{y}$$

und

$$\tan(\alpha) = \frac{r_{Blende}}{a + y}:$$

$$r_{Blende} = \frac{r_{LED} \cdot (a + y)}{y} = a + y \cdot \tan(\alpha)$$

Hieraus folgt:

$$a = \left| - y \right|$$

Schließlich folgt aus $\tan(\alpha) = \dfrac{r_{Blende}}{a + y}$:

$$r_{Blende} = \tan(\alpha) \cdot (a + y)$$

Auf Basis dieser Beziehungen kann also eine Blende gewählt und angeordnet werden, so dass einerseits effizient die ungewünschten Lichtanteile eliminiert werden und andererseits eine maximale Effizienz für den LED-Strahler erzielt wird. Die Berechnung der Größen ist hierbei unabhängig von der Krümmung des Reflektors, d.h., die angegebenen Beziehungen gelten auch für anderweitig geformte Reflektoren.

Die Halterung der Blende 20 innerhalb des topfförmigen Strahlers erfolgt bei dem Ausführungsbeispiel von Figur 1 über mehrere Stege 24, die sich von der Innenseite des Reflektors 5 zum Außenumfang der Blende 20 erstrecken. Die Stege 24 sind möglichst dünn bemessen, um die eigentliche Lichtabgabe nicht zu beeinträchtigen. Andererseits sollten sie eine ausreichende Stabilität aufweisen, um die Blende 20 zuverlässig in der gewünschten Position zu halten.

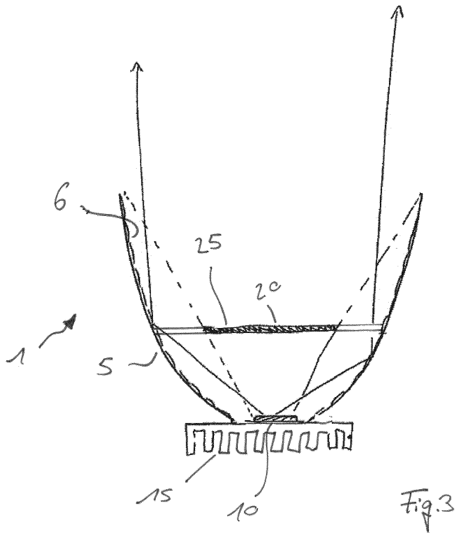

Eine alternative Möglichkeit der Halterung der Blende 20 in dem Reflektor 5 ist in Figur 3 dargestellt. In diesem Fall ist die Blende 20 Bestandteil einer Scheibe 25, welche - wiederum parallel zur LED-Lichtquelle 10 ausgerichtet ist und sich durch den Reflektor 5 erstreckt. Derjenige Bereich der Scheibe 25, der die Funktion der Blende 20 erfüllen soll, ist hierbei derart beschichtet bzw. mit einem Material versehen, dass auftreffendes Licht absorbiert wird. Der umgebende Bereich hingegen ist vorzugsweise vollkommen klar ausgestaltet, um hier Lichtstrahlen möglichst ungehindert hindurchtreten zu lassen.

Letztendlich wird also mit der vorliegenden Erfindung ein optimierter LED-Strahler geschaffen, der hinsichtlich seiner Lichtabstrahleigenschaften nochmals deutliche Vorteile gegenüber bekannten Strahlern aufweist und trotz allem das von der Lichtquelle abgegebene Licht effizient nutzt.

**Patentansprüche**

1.  Strahler (1) mit einem topfartigen Reflektor (5) sowie einer am Boden des Reflektors (5) angeordneten LED-Lichtquelle (10), wobei innerhalb des Reflektors (5) eine kreisförmige Blende (20) angeordnet ist, welche auftreffendes Licht absorbiert und derart ausgestaltet und angeordnet ist, dass sie eine direkte Abstrahlung von Licht verhindert, wobei die LED-Lichtquelle (10) und die Blende (20) eine ähnliche Umfangsform aufweisen, die Reflektorwände (6) eine Parabelform aufweisen und der Reflektor (5) rotationssymmetrisch ist,
    **dadurch gekennzeichnet,**
    **dass** für den Abstand a zwischen LED-Lichtquelle (10) und Blende (20) gilt: $a = |\text{-}y|$, wobei
    $$y = \frac{h \cdot r_{refl} - h \cdot z}{z}$$ und $z = r_{refl} \text{-} r_{LED}$, wobei h die Höhe des Reflektors, $r_{refl}$ der Radius der Lichtaustrittsöffnung des Reflektors, $r_{LED}$ der Radius der LED-Lichtquelle und y der Abstand der LED-Lichtquelle (10) zum Scheitelpunkt bzw. Schnittpunkt der aufeinander zulaufenden Reflektorwände (6) ist und
    **dass** für den Radius der Blende $r_{Blende}$ gilt: $r_{Blende} =$
    $\tan(\alpha) \cdot (a + y)$ wobei $\tan(\alpha) = \dfrac{r_{refl}}{h + y}$.

2.  Strahler nach Anspruch 1,
    **dadurch gekennzeichnet,**
    **dass** die Blende (20) über Stege (24) in dem Reflektor (5) gelagert ist.

3.  Strahler nach Anspruch 1,
    **dadurch gekennzeichnet,**
    **dass** die Blende (20) Bestandteil einer Scheibe (25) ist, welche sich - vorzugsweise parallel zur LED-Lichtquelle (10) - durch den Reflektor (5) erstreckt, wobei der außerhalb der Blende (20) befindliche Bereich der Scheibe (25) klar ist.

**4.** Strahler nach einem der vorherigen Ansprüche, **dadurch gekennzeichnet,**

**dass** die LED-Lichtquelle (10) auf einem Kühlkörper (15) gelagert oder thermisch mit einem Kühlkörper gekoppelt ist.

**Claims**

**1.** Spotlight (1) having a cup-like reflector (5) and an LED light source (10) arranged on the base of the reflector (5), wherein a circular aperture (20) is arranged within the reflector (5), absorbs impinging light, and is designed and arranged in such a way that it prevents direct radiation of light, wherein the LED light source (10) and the aperture (20) have a similar peripheral shape, the reflector walls (6) have a parabolic shape, and the reflector (5) is rotationally symmetrical,

**characterized in that**

for the distance a between the LED light source (10) and the aperture (20), the following is true: $a=|-y|$

wherein $y = \dfrac{h \cdot r_{refl} - h \cdot z}{z}$ and $z = r_{refl} \text{-} r_{LED}$, wherein h is the height of the reflector, $r_{refl}$ is the radius of the light outlet opening of the reflector, $r_{LED}$ is the radius of the LED light source, and y is the distance of the LED light source (10) from the apex or intersection point of the reflector walls (6) running toward one another, and that the following is true for the radius of the aperture: $r_{aperture} = tan(\alpha)\cdot(a + y)$, wherein

$$\tan(\alpha) \;=\; \dfrac{r_{refl}}{h + y}.$$

**2.** Spotlight according to Claim 1,
**characterized in that**
the aperture (20) is mounted in the reflector (5) by means of bars (24) .

**3.** Spotlight according to Claim 1,
**characterized in that**
the aperture (20) is a component of a pane (25) which extends through the reflector (5), preferably in parallel to the LED light source (10), wherein the region of the pane (25) located outside the aperture (20) is clear.

**4.** Spotlight according to any one of the preceding claims, **characterized in that**
the LED light source (10) is mounted on a cooling body (15) or is thermally coupled to a cooling body.

**Revendications**

**1.** Dispositif de rayonnement (1) comprenant un réflecteur (5) en forme de pot ainsi qu'une source lumineuse DEL (10) disposée sur le fond du réflecteur (5), un diaphragme (20) circulaire étant disposé à l'intérieur du réflecteur (5), lequel absorbe la lumière incidente et est conçu et disposé de telle façon qu'il empêche une émission directe de lumière, la source lumineuse DEL (10) et le diaphragme (20) présentant une forme circonférentielle similaire, les paroi du réflecteur (6) présentant une forme parabolique et le réflecteur (5) étant symétrique en rotation, **caractérisé en ce**

**que** pour la distance a entre la source lumineuse DEL (10) et le diaphragme $a = |\text{-}y|$ s'applique :

où $y = \dfrac{h \cdot r_{refl} - h \cdot z}{z}$ et $z = r_{refl} \text{-} r_{LED}$, où h représente la hauteur du réflecteur, $r_{refl}$ le rayon de l'ouverture de sortie de lumière du réflecteur, $r_{LED}$ le rayon de la source lumineuse DEL et y la distance de la source lumineuse DEL (10) au sommet ou point d'intersection des parois du réflecteur (6) convergeant les unes vers les autres, et

**que** pour le rayon du diaphragme s'applique :
$r_{diaphragme} = tan(\alpha)\cdot(a + y)$ où

$$\tan(\alpha) \;=\; \dfrac{r_{refl}}{h + y}.$$

**2.** Dispositif de rayonnement selon la revendication 1, **caractérisé en ce**
**que** le diaphragme (20) est logé au moyen de traverses (24) dans le réflecteur (5).

**3.** Dispositif de rayonnement selon la revendication 1, **caractérisé en ce**
**que** le diaphragme (20) fait partie d'un disque (25), lequel s'étend - de préférence parallèle à la source lumineuse DEL (10) - à travers le réflecteur (5), la zone du disque (25) se trouvant en dehors du diaphragme (20) étant transparente.

**4.** Dispositif de rayonnement selon l'une quelconque des revendications précédentes, **caractérisé en ce**
**que** la source lumineuse DEL (10) est logée sur un dissipateur de chaleur (15) ou couplée thermiquement à un dissipateur de chaleur.

Fig.1

Fig.2

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003117798 A1

- CN 202091826 U